# EUROPÄISCHE PATENTSCHRIFT

(11) **EP 1 125 042 B1**
(45) Veröffentlichungstag und Bekanntmachung des Hinweises auf die Patenterteilung: **22.06.2005**
(21) Anmeldenummer: 00956282.8
(22) Anmeldetag: 26.07.2000
(51) Int. Cl.: F02D 41/14, F02D 41/24

(54) **REGELUNG EINES OTTOMOTORS**
CONTROL OF AN OTTO ENGINE
REGULATION D'UN MOTEUR A ALLUMAGE COMMANDE

(30) Priorität: 24.08.1999 DE 19939973
(43) Veröffentlichungstag der Anmeldung: 22.08.2001
(73) Patentinhaber: Volkswagen Aktiengesellschaft, 38436 Wolfsburg (DE)
(72) Erfinder: HEINRICH, Axel, D-38527 Meine (DE); AYEB, Mohammed, D-34125 Kassel (DE)
(86) Internationale Anmeldenummer: PCT/EP2000/007146
(87) Internationale Veröffentlichungsnummer: WO 2001/014704

(56) Entgegenhaltungen:
- EP-A- 0 886 725
- EP-A- 0 899 440
- WO-A-99/15769
- US-A- 5 889 205
- PATENT ABSTRACTS OF JAPAN vol. 018, no. 644 (M-1718), 7. Dezember 1994 (1994-12-07) & JP 06 249033 A (NIPPONDENSO CO LTD), 6. September 1994 (1994-09-06)

## Beschreibung

Die Erfindung betrifft ein Verfahren zur Validierung von Parametermodellen zugrundeliegender Größen, wobei die Parametermodelle zur Ermittlung von Sollwerten für Betriebsparameter einer Verbrennungskraftmaschine dienen, mit den im Oberbegriff des Anspruchs 1 genannten Merkmalen.

Es ist bekannt, einen Betriebsmodus von Verbrennungskraftmaschinen durch Zuordnung von geeigneten Stellmitteln wie einer Drosselklappe, einem Einspritzsystem oder einem Abgasrückführsystem zu beeinflussen. In einem bestimmten Betriebspunkt der Verbrennungskraftmaschine lassen sich charakterisierende Betriebsparameter wie beispielsweise eine Lufttemperatur, eine Motortemperatur, eine Drehzahl, eine EGR-Rate oder eine Einspritzzeit direkt, beispielsweise mit geeigneten Sensoren, bestimmen. Dabei ist es bekannt, diese Betriebsparameter in ein Motorsteuergerät einzulesen und hierüber die Steuerung der Stellmittel anhand von vorgebbaren Stellgrößen zu verwirklichen. Da einige Betriebsparameter wie beispielsweise ein Drehmoment oder ein Luftmassenstrom nicht direkt erfaßt werden können oder eine entsprechende Sensorik zu aufwendig ist, sind Parametermodelle entwickelt worden, mit denen ein Sollwert für diese Betriebsparameter berechnet werden kann. Dazu müssen bei den bekannten Parametermodellen zunächst die zugrundeliegenden Größen des jeweiligen Modells vorgegeben werden. Anschließend wird ein Eingangssignal unter Zuhilfenahme der vorgegebenen Größen verarbeitet und in Form des Sollwertes für den jeweiligen Betriebsparameter ausgegeben.

Nachteilig an derartigen Parametermodellen ist, daß Änderungen, die während eines dynamischen Betriebes der Verbrennungskraftmaschine auftreten können, nicht berücksichtigt werden. So erfolgt zwar bei bekannten Verfahren, insbesondere zur Regelung des Arbeitsmodus der Verbrennungskraftmaschine, ein Vergleich der Sollwerte mit den gemessenen Betriebsparametern in dem Motorsteuergerät und nachfolgend wird aus deren Abweichung eine Stellgröße für die Stellmittel ermittelt, jedoch bleibt hier unberücksichtigt, daß mit fortschreitender Lebensdauer der Verbrennungskraftmaschine die vormals aufgestellten Parametermodelle von dem wirklichen Zustand abweichen. Dies kann die Folge haben, daß die Verbrennungskraftmaschine an dem jeweiligen Arbeitspunkt nicht mehr optimal betrieben werden kann und ein Mehrverbrauch und eine Mehremission an Schadstoffen in Kauf genommen werden muss. Eine Korrektur der dem Parametermodell zugrundeliegenden Größen ist bei herkömmlichen Verfahren nur möglich, wenn entsprechende Schnittstellen zur Dateneinspeisung vorhanden sind. Dies erhöht einerseits die Materialkosten und führt andererseits zu einem erhöhten Wartungsaufwand. Abgesehen davon ist es praktisch sehr aufwendig, über einen externen Zugriff die individuelle Anpassung der Parametermodelle durchzuführen.

Die US 5 889 205 beschreibt ein Verfahren zur Modellierung eines Saugrohrdruckes, bei welchem ein berechneter Luftmassenstrom mit einem gemessenen Luftmassenstrom verglichen wird, um daraus eine Korrektur der reduzierten Querschnittsfläche der Drosselklappe vorzunehmen. Gleichzeitig wird die errechnete Differenz auch dazu benutzt, das benutzte Modell im dynamischen Betrieb anzupassen.

Aufgabe der vorliegenden Erfindung ist es, ein Verfahren zur Verfügung zu stellen, das es ermöglicht, die Parametermodelle auch in einem dynamischen Betrieb dem tatsächlichen Zustand der Verbrennungskraftmaschine anzupassen. Außerdem soll das Problem beseitigt werden, welches darin besteht, daß die Werte von gemessenen Größen, die in verschiedenen Parametermodellen benötigt werden, oftmals nur mit einer gewissen zeitlichen Verzögerung der Auswerteeinheit zur Verfügung stehen. Dabei soll dies mit hoher Betriebssicherheit und unter geringstmöglichem zusätzlichen Wartungsaufwand erfolgen. Ferner soll der Materialaufwand möglichst gering gehalten werden.

Erfindungsgemäß wird diese Aufgabe durch das Verfahren zur Validierung von Parametermodellen zugrundeliegender Größen mit den Merkmalen des Anspruchs 1 gelöst. Bei dem Verfahren ist vorgesehen,
(a) während eines dynamischen Betriebs der Verbrennungskraftmaschine zumindest ein erfaßter Betriebsparameter mit dem Sollwert verglichen wird, wobei der Sollwert und der erfasste Betriebsparameter die gleiche Dimension haben,
(b) in Abhängigkeit von einer Höhe einer Abweichung des Sollwertes von dem Betriebsparameter ein Korrekturwert erzeugt wird und
(c) nachfolgend der Korrekturwert zur Wichtung der dem Parametermodell zugrundeliegenden Größen genutzt wird,
wobei der über ein Parametermodell ermittelte Sollwert eine zugrundeliegende Größe eines weiteren Parametermodells ist.

Auf diese Weise ist es möglich, eine selbsttätig angepaßte Regelstruktur in den Parametermodellen zu implementieren und außerdem die berechneten Werte ohne zeitliche Verzögerung den anderen Modellen zur Verfügung zu stellen. Die Parametermodelle müssen vor ihrem ersten Einsatz nur einmalig einen entsprechenden Datensatz für die zugrundeliegenden Größen vorgegeben bekommen. Gegebenenfalls kann dieser Datensatz bereits in einer Trainingsphase, beispielsweise auf einem Prüfstand oder bei Testfahrten, voroptimiert werden und ist daher schon individuell angepaßt. Dadurch können Serienstreuungen, unterschiedliche Betriebsbedingungen und Alterungen einfach berücksichtigt werden.

Weiterhin ist vorteilhaft, daß die verwendeten Parametermodelle nur mit sich selbst rückgekoppelt sind, so daß während der Validierung der zugrundeliegenden Größen größtmögliche Stabilität sichergestellt werden kann. Auf eine zusätzliche Einspeisung von Daten - wie bei herkömmlichen Parametermodellen üblich - kann verzichtet werden. Damit entfällt auch die Notwendigkeit, geeignete Schnittstellen für den Datentransfer zur Verfügung zu stellen, was die Materialkosten senkt.

Es hat sich als besonders vorteilhaft erwiesen, das erfindungsgemäße Verfahren mit Parametermodellen, die einen Saugrohrinnendruck, einen Luftmassenstrom und das Drehmoment der Verbrennungskraftmaschine umfassen, durchzuführen. So kann beispielsweise das Parametermodell für den Saugrohrinnendruck einen Sollwert liefern, der als eine zugrundeliegende Größe des Parametermodells für den Luftmassenstrom dient. Im weiteren kann in gleicher Weise ein Sollwert für das Drehmoment ermittelt werden.

Da es sich gezeigt hat, daß letzterer Betriebsparameter besonders vorteilhaft zur Steuerung eines Betriebsmodusreglers genutzt werden kann, fließt der Sollwert für das Drehmoment als eine zugrundeliegende Größe in ein Modell für die Stellgrößen des Betriebsmodusreglers ein. Die Stellgrößen umfassen dann beispielsweise einen Drosselklappenöffnungswinkel und einen Zündwinkel.

Weitere bevorzugte Ausgestaltungen der Erfindung ergeben sich aus den übrigen, in den Unteransprüchen genannten Merkmalen.

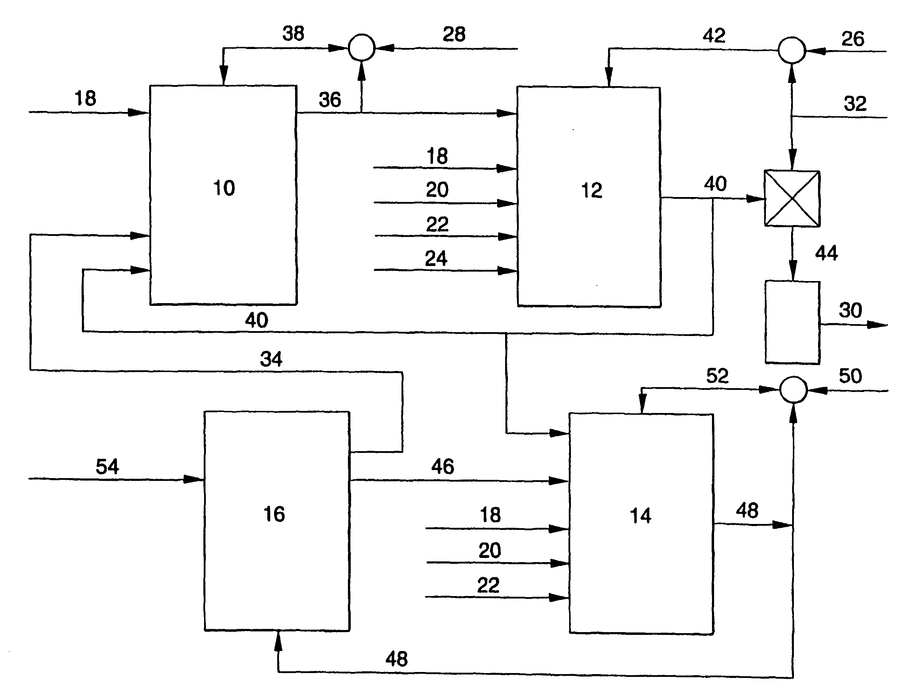

Die Erfindung wird nachfolgend in einem Ausführungsbeispiel anhand einer Zeichnung näher erläutert. Dabei zeigt die Figur ein schematisches Blockschaltbild zur Validierung von Parametermodellen zugrundeliegender Größen.

Das in dem Ausführungsbeispiel beschriebene Verfahren dient zur Festlegung von Stellgrößen für einen Betriebsmodusregler einer Verbrennungskraftmaschine. Insgesamt sind in der Figur drei Parametermodelle 10, 12, 14 dargestellt, wovon ersteres einen Sollwert für einen Saugrohrinnendruck (Parametermodell 10), zweiteres einen Sollwert für einen Luftmassenstrom (Parametermodell 12) und letzteres einen Sollwert für ein Drehmoment (Parametermodell 14) liefert. Ferner ist den Parametermodellen 10, 12, 14 ein Modell 16 für Stellgrößen eines Betriebsmodusreglers einer Verbrennungskraftmaschine zugeordnet.

Die Verbrennungskraftmaschine verfügt üblicherweise über eine geeignete Sensorik, um ausgewählte Betriebsparameter zu erfassen. Derartige Sensoren sind bekannt und ermöglichen beispielsweise die Erfassung einer Lufttemperatur 18, einer Motortemperatur 20, einer Drehzahl 22, einer EGR-Rate 24, einen Lambdawert 26 oder einen Saugrohrinnendruck 28. Neben diesen direkt erfaßbaren Betriebsparametern ist es selbstverständlich weiterhin möglich, auch über konventionelle Parametermodelle ermittelte Werte für Betriebsparameter den erfindungsgemäßen Parametermodellen 10, 12, 14 zugrunde zu legen.

Dem Parametermodell 10 für den Saugrohrinnendruck liegen die Lufttemperatur 18, ein Luftmassenstrom 40 und ein Drosselklappenöffnungswinkel 34 als Eingangsgrößen zugrunde. Diese Eingangsgrößen werden entsprechend den Parametermodellen zugrundeliegender Größen verarbeitet und liefern einen Sollwert 36 für den Saugrohrinnendruck. Der Sollwert 36 wird anschließend mit dem gemessenen Saugrohrinnendruck 28 verglichen. In Abhängigkeit von einer Höhe einer Abweichung des Sollwertes 36 von dem Saugrohrinnendruck 28 wird ein Korrekturwert 38 erzeugt, der wiederum zur Wichtung der dem Parametermodell 10 zugrundeliegenden Größen herangezogen wird. Auf diese Weise kann das Parametermodell 10 laufend neuen Bedingungen angepaßt werden.

Nachfolgend dienen der Sollwert 36 für den Saugrohrinnendruck sowie die Lufttemperatur 18, die Motortemperatur 20, die Drehzahl 22 und die EGR-Rate 24 als Eingangsgrößen für das Parametermodell 12 des Luftmassenstroms. Wieder wird mittels dem Modell zugrundeliegender Größen ein Sollwert 40 für den Luftmassenstrom berechnet. Sofern der Luftmassenstrom nicht direkt ermittelbar ist, kann dieser auch noch gesondert über ein autarkes - hier nicht dargestelltes - Modell, das den gemessenen Lambdawert 26 mit einem berechneten Lambdawert 32 vergleicht, berechnet werden. Dieser "Istwert" des Luftmassenstroms wird mit dem Sollwert 40 verglichen und führt bei einer Abweichung zur Bildung eines Korrekturwertes 42, der wiederum bei der Wichtung der dem Parametermodell 12 zugrundeliegenden Größen genutzt wird. Der Sollwert 40 kann ferner zur Regelung eines Kraftstoffmassenstroms 44 dienen, indem beispielsweise eine Einspritzzeit 30 entsprechend vorgegeben wird.

Ferner dient der Sollwert 40 des Luftmassenstroms als Eingangsgröße des Parametermodells 14 für das Drehmoment der Verbrennungskraftmaschine. Zusätzlich fließen in das Parametermodell 14 Eingangsgrößen ein wie die Lufttemperatur 18, die Motortemperatur 20, die Drehzahl 22 und ein Zündwinkel 46. Unter Berücksichtigung der dem Parametermodell 14 zugrundeliegenden Größen wird ein Sollwert 48 für das Drehmoment ermittelt. Durch Vergleich des Sollwertes 48 mit einem autark hiervon ermittelten Drehmoment 50 - beispielsweise durch ein weiteres, hier nicht dargestelltes Modell - läßt sich wiederum eine Abweichung ermitteln, die gegebenenfalls zu einem Korrekturwert 52 führt, der bei einer erneuten Wichtung der dem Parametermodell 14 zugrundeliegenden Größen berücksichtigt werden muß.

Der Sollwert 48 des Drehmoments stellt neben einer Leistungsanforderung 54 durch den Fahrzeugführer die Eingangsgröße für das Modell 16 zur Ermittlung der Stellgrößen des Betriebsmodusreglers dar. Selbstverständlich kann auch dieses Modell 16 derart ausgestaltet werden, daß auch hier dynamische Größen dem Modell 16 zugrundeliegen. Entsprechend den durch das Modell 16 ermittelten Stellgrößen können dann der Drosselklappenöffnungswinkel 34 sowie der Zündwinkel 46 als Stellmittel des Betriebsmodus beeinflußt werden.

## Patentansprüche

1. Verfahren zur Validierung von Parametermodellen zugrundeliegender Größen, wobei die Parametermodelle zur Ermittlung von Sollwerten für Betriebsparameter dienen, die einen Betriebsmodus einer Verbrennungskraftmaschine charakterisieren, und der Verbrennungskraftmaschine Mittel zur Erfassung von Betriebsparametern zugeordnet sind, und wobei
(a) während eines dynamischen Betriebs der Verbrennungskraftmaschine zumindest ein erfasster Betriebsparameter mit dem Sollwert verglichen wird, wobei der Sollwert und der erfasste Betriebsparameter die gleiche Dimension haben,
(b) in Abhängigkeit von einer Höhe einer Abweichung des Sollwertes von dem Betriebsparameter ein Korrekturwert erzeugt wird und
(c) nachfolgend der Korrekturwert zur Wichtung der dem Parametermodell zugrundeliegenden Größen genutzt wird,
**dadurch gekennzeichnet, dass** der über ein Parametermodell ermittelte Sollwert eine zugrundeliegende Größe eines weiteren Parametermodells ist.

2. Verfahren nach Anspruch 1, **dadurch gekennzeichnet, dass** die Parametermodelle einen Saugrohrdruck, einen Luftmassenstrom und ein Drehmoment der Verbrennungskraftmaschine umfassen.

3. Verfahren nach Anspruch 2, **dadurch gekennzeichnet, dass** das Parametermodell für den Saugrohrdruck einen Sollwert liefert, der als eine zugrundeliegende Größe des Parametermodells für den Luftmassenstrom dient.

4. Verfahren nach Anspruch 2, **dadurch gekennzeichnet, dass** das Parametermodell für den Luftmassenstrom einen Sollwert liefert, der als eine zugrundeliegende Größe des Parametermodells für den Saugrohrdruck dient.

5. Verfahren nach Anspruch 2, **dadurch gekennzeichnet, dass** das Parametermodell für den Luftmassenstrom einen Sollwert liefert, der als eine zugrundeliegende Größe des Parametermodells für das Drehmoment dient.

6. Verfahren nach einem der vorhergehenden Ansprüche, **dadurch gekennzeichnet, dass** das Parametermodell für das Drehmoment einen Sollwert liefert, der als eine zugrundeliegende Größe eines Modells für Stellgrößen eines Betriebsmodusreglers der Verbrennnungskraftmaschine dient, wobei der Betriebsmodusregler Stellmittel umfaßt, die entsprechend der Stellgrößen zur zumindest temporären Beeinflussung des Betriebsmodus dienen.

7. Verfahren nach Anspruch 6, **dadurch gekennzeichnet, dass** die Stellgrößen einen Drosselklappenöffnungwinkel und einen Zündwinkel umfassen.

## Claims

1. Method for validating parameter models of underlying variables, wherein the parameter models are used to determine setpoint values for operating parameters which characterize an operating mode of an internal combustion engine, and means for sensing operating parameters are assigned to the internal combustion engine, and wherein
(a) during a dynamic operation of the internal combustion engine at least one sensed operating parameter is compared with the setpoint value, with the setpoint value and the sensed operating parameter having the same dimension,
(b) a correction value is generated as a function of a level of a deviation of the setpoint value from the operating parameter, and
(c) the correction value is subsequently used to weigh the variables, on which the parameter model is based,
**characterized in that** the setpoint value which is determined by means of a parameter model is an underlying variable for a further parameter model.

2. The method as claimed in Claim 1, **characterized in that** the parameter models comprise an intake manifold pressure, an air mass flow rate and a torque of the internal combustion engine.

3. Method according to Claim 2, **characterized in that** the parameter model for the intake manifold pressure supplies a setpoint value which serves as an underlying variable for the parameter model for the air mass flow rate.

4. Method according to Claim 2, **characterized in that** the parameter model for the air mass flow rate supplies a setpoint value which serves as an underlying variable for the parameter model for the intake manifold pressure.

5. Method according to Claim 2, **characterized in that** the parameter model for the air mass flow rate supplies a setpoint value which serves as an underlying variable for the parameter model for the torque.

6. Method according to one of the preceding claims, **characterized in that** the parameter model for the torque supplies a setpoint value which serves as an underlying variable of a model for manipulated variables of an operating mode regulator of the internal combustion engine, with the operating mode regulator comprising actuating means which serve to at least temporarily influence the operating mode in accordance with the manipulated variables.

7. Method according to Claim 6, **characterized in that** the manipulated variables comprise a throttle valve angle of aperture and an ignition angle.

## Revendications

1. Procédé pour valider des variables qui constituent la base de modèles de paramètres, sachant que les modèles de paramètres servent à déterminer des valeurs de consigne pour des paramètres de fonctionnement qui caractérisent un mode de fonctionnement d'un moteur à combustion interne, et que des moyens pour détecter des paramètres de fonctionnement sont affectés au moteur à combustion interne, et sachant que
(a) pendant un fonctionnement dynamique du moteur à combustion interne, au moins un paramètre détecté de fonctionnement est comparé à la valeur de consigne, la valeur de consigne et le paramètre détecté de fonctionnement étant dans la même unité,
(b) une valeur de correction est produite en fonction du montant d'un écart de la valeur de consigne par rapport au paramètre de fonctionnement, et
(c) la valeur de correction étant ensuite utilisée pour pondérer les variables de base du modèle de paramètres,
**caractérisé en ce que** la valeur de consigne déterminée au moyen d'un modèle de paramètres est une variable de base d'un autre modèle de paramètres.

2. Procédé selon la revendication 1, **caractérisé en ce que** les modèles de paramètres comprennent une pression de collecteur d'admission, un débit massique d'air et un couple de rotation du moteur à combustion interne.

3. Procédé selon la revendication 2, **caractérisé en ce que** le modèle de paramètres pour la pression de collecteur d'admission fournit une valeur de consigne qui sert de variable de base du modèle de paramètres pour le débit massique d'air.

4. Procédé selon la revendication 2, **caractérisé en ce que** le modèle de paramètres pour le débit massique d'air fournit une valeur de consigne qui sert de variable de base du modèle de paramètres pour la pression de collecteur d'admission.

5. Procédé selon la revendication 2, **caractérisé en ce que** le modèle de paramètres pour le débit massique d'air fournit une valeur de consigne qui sert de variable de base du modèle de paramètres pour le couple de rotation.

6. Procédé selon l'une quelconque des revendications précédentes, **caractérisé en ce que** le modèle de paramètres pour le couple de rotation fournit une valeur de consigne qui sert de variable de base d'un modèle pour des variables réglantes d'un régulateur de mode de fonctionnement du moteur à combustion interne, sachant que le régulateur de mode de fonctionnement comprend des moyens de commande qui servent à influer au moins temporairement sur le mode de fonctionnement en fonction des variables réglantes.

7. Procédé selon la revendication 6, **caractérisé en ce que** les variables réglantes comprennent un angle d'ouverture de papillon et un angle de came.
